# EUROPÄISCHE PATENTANMELDUNG

(11) **EP 2 145 536 A1**
(43) Veröffentlichungstag der Anmeldung: **20.01.2010**
(21) Anmeldenummer: 09009159.6
(22) Anmeldetag: 14.07.2009
(51) Int. Cl.: A01K 63/04

(54) **Fischaufzuchtanlage für Salzwasserfische**

(30) Priorität: 17.07.2008 DE 102008033528
(71) Anmelder: ERWIN SANDER ELEKTROAPPARATEBAU GMBH, 31311 Uetze-Eltze (DE)
(72) Erfinder: Sander, Martin, 31311 Uetze-Eltze (DE)
(74) Vertreter: Rehmann, Thorsten

(57) **Zusammenfassung**

Fischaufzuchtanlage für Salzwasserfische mit mindestens einem Fischaufzuchtbecken (2a,2b), einer Wasseraufbereitungseinrichtung (12), einer Zuleitungseinrichtung (20), über die aufbereitetes Wasser aus der Wasseraufbereitungseinrichtung (12) dem mindestens ein Fischaufzuchtbecken (2a,2b) zuführbar ist, und einer Ableitungseinrichtung (10), über die aufzubereitendes Wasser aus dem mindestens ein Fischaufzuchtbecken (2a,2b) ableitbar und der Wasseraufbereitungseinrichtung (12) zuführbar ist, wobei der kürzest mögliche Weg innerhalb des mindestens einen Fischaufzuchtbeckens (2a,2b) von der Zuleitungseinrichtung (20) zu der Ableitungseinrichtung (10) zunächst von der Wasseraufbereitungseinrichtung (12) weg- und anschließend zu der Wasseraufbereitungseinrichtung (12) hinführt.

## Beschreibung

Die Erfindung betrifft eine Fischaufzuchtanlage für Salzwasserfische mit mindestens einem Fischaufzuchtbecken, einer Wasseraufbereitungseinrichtung, einer Zuleitungseinrichtung, über die aufbereitetes Wasser aus der Wasseraufbereitungseinrichtung dem mindestens einen Fischaufzuchtbecken zuführbar ist, und einer Ableitungseinrichtung, über die aufzubereitendes Wasser aus dem mindestens einen Fischaufzuchtbecken ableitbar und der Wasseraufbereitungseinrichtung zuführbar ist. Zudem betrifft die Erfindung ein Verfahren zum Betreiben einer Fischaufzuchtanlage für Salzwasserfische, das die folgenden Schritte umfasst:
a) Entnehmen von aufzubereitendem Wasser aus mindestens einem Fischaufzuchtbecken über eine Ableitungseinrichtung,
b) Aufbereiten des entnommenen Wassers in einer Wasseraufbereitungseinrichtung,
c) Zuführen des in der Wasseraufbereitungseinrichtung aufbereiteten Wassers in das mindestens eine Fischaufzuchtbecken über eine Zuleitungseinrichtung.

Für die Süßwasserfischzucht ist eine derartige Fischaufzuchtanlage beispielsweise aus der DE 38 27 716 A1 bekannt. Im Betrieb einer derartigen Anlage wird das Wasser aus dem einen oder mehreren Fischbecken abgepumpt und über Rohrleitungssysteme einer Wasseraufbereitungseinrichtung zugeführt. Dort wird das Wasser beispielsweise von Fischexkrementen, Futterresten und anderen Verunreinigungen gereinigt und danach über weitere Rohrleitungen dem Fischbecken wieder zugeführt.

Das in einer Fischaufzuchtanlage für Salzwasserfische verwendete Salzwasser ist deutlich aggressiver als Süßwasser. Es greift die Rohre, in denen es transportiert wird, von innen an und beschädigt sie. In Fischaufzuchtanlagen für Salzwasserfische müssen daher entweder in regelmäßigen Abständen die gesamten Rohrleitungssysteme ausgetauscht oder zumindest auf Beschädigungen untersucht werden oder Spezialrohre verwendet werden, denen das in ihnen transportierte Salzwasser nichts anhaben kann. Diese Rohre sind jedoch sehr kostenaufwändig.

Alternativ kann der Transport des Wassers auch über offene Rinnen, die beispielsweise gemauert oder aus Beton gegossen sein können, erfolgen. Um diese Rinnen möglichst kurz zu halten und damit neben den Produktionskosten auch die Verdunstung des Wassers zu reduzieren, werden diese Rinnen vorzugsweise direkt neben dem Fischaufzuchtbecken parallel dazu entlang geführt. Nachteilig ist, dass diese Rinnen kosten- und platzintensiv sind, und es dennoch zu einer Verdunstung des in ihnen geführten Wassers kommt. Dadurch, dass diese Rinne direkt an einer Beckenkante entlangläuft, ist an dieser Seite kein einfacher Zugang zum Becken, beispielsweise für Wartungsarbeiten, mehr möglich.

Aus der GB 2 406 771 A ist ein Wassertank zur Aufzucht von Wassertieren bekannt, bei dem sich die Wasseraufbereitungseinrichtung in der Mitte des Tanks befindet. Das Wasser wird an einer Entnahmestelle dem Tank entnommen und, nachdem es die Wasseraufbereitungseinrichtung durchlaufen hat, über eine Mehrzahl von Düsen so in den Tank zurückgeleitet, dass das Wasser im Tank in Zirkulation versetzt wird.

Dadurch soll gewährleistet werden, dass sich das gereinigte Wasser mit dem im Tank befindlichen Wasser gut durchmischt und der gesamte Tankinhalt an der Entnahmestelle vorbeigeführt wird.

Aus der DE 199 57 954 A1 ist ein Anlagensystem zur intensiven Aufzucht und Mast von Speisefischen bekannt, bei Wasser an einer Stelle einem Produktionsbecken entnommen wird, verschiedene Filter und Aufbereitungseinrichtungen durchläuft und anschließend an einer zweiten Stelle dem Produktionsbecken wieder zugeführt wird.

Auch aus der DE 10 2006 019 741 A1 ist eine derartige Anlage bekannt. Dabei wird das dem Aufzuchtsbecken entnommene Wasser zunächst einem Sedimenter und anschließend verschiedenen weiteren Filterstufen zugeführt, bevor es wieder dem Aufzuchtbecken zugeleitet wird.

Aus der DE 69 34 213 U ist eine Vorrichtung zur Aufzucht und Aufbewahrung von im Wasser lebenden Tieren, insbesondere Fischen bekannt, bei denen ein Behälter durch eingesetzte Kleinbehälter in verschiedene Kammern unterteilt ist. Auf diese Weise ist es möglich, verschiedene Tiere in einem Gemeinschaftsaquarium getrennt voneinander zu halten.

Die DE 20 2005 016 381 U1 offenbart eine Vorrichtung und Anlage zur Aufzucht von im Wasser lebenden Tieren, bei der das Aufzuchtbecken als ein in sich geschlossenes Rinnensystem ausgeführt ist. Auf diese Weise ist es möglich, auch solche Tiere aufzuziehen, die in der Natur in strömenden Gewässern vorkommen. Wasser wird im Aufzuchtbecken entnommen und einer Wasseraufbereitungseinrichtung zugeführt. Das gereinigte Wasser wird dem Aufzuchtbecken über Einströmöffnungen wieder zugeleitet, die bevorzugt rechtwinklig zum Boden angeordnet sind, so dass das Wasser parallel zum Boden in das Aufzuchtbecken einströmt. Dadurch wird das Wasser im Aufzuchtbecken in Rotation versetzt und so die Strömung erzeugt.

Die AT 503 083 A1 offenbart eine Anlage zur Aufbereitung von Salzwasser. Dabei wird Salzwasser einem Aufzuchtbecken entnommen, in einer Wasseraufbereitungseinrichtung gereinigt und dem Becken an einer anderen Stelle wieder zugeführt.

Aus der EP 1 457 109 A1 ist eine Anlage zur Haltung und Mast von Nutzfischen bekannt, deren Fischaufzuchtbecken kreisförmig ausgebildet ist. In der Mitte ist ein Mittelzylinder angeordnet, in dem Saugrohre vorgesehen sind, durch die Wasser dem Fischaufzuchtbecken entnommen wird. Dieses Wasser wird verschiedenen Wasseraufbereitungseinrichtungen zugeführt und anschließend über einen Wasserzulauf dem kreisförmigen Becken wieder zugeführt. Dabei befindet sich der Wasserzulauf am Rand des Beckens und zeigt im Wesentlichen in dessen Richtung, so dass das Wasser im Fischaufzuchtbecken in Rotation versetzt wird. Dadurch wird einerseits den Tieren das Gefühl vermittelt, sich in einem strömenden Gewässer zu befinden und andererseits werden Schweb- und Sinkstoffe, die im Fischaufzuchtbecken anfallen, im Bereich der Mitte des Fischaufzuchtbeckens konzentriert und dort abgesaugt.

Die DE 198 47 035 C1 offenbart eine Anlage zur Fischaufzucht, bei der eine Mehrzahl gleicher Fischbecken, die jeweils über eine Wasseraufbereitungseinrichtung verfügen, in einem gemeinsamen Wasserkreislauf angeordnet. Dabei können einzelne Fischaufzuchtbecken durch eine einzusetzende Rinne überbrückt werden, so dass Reinigungs-, Wartungs- und Reparaturarbeiten in einzelnen Becken durchgeführt werden können, ohne die Anlage komplett stillegen zu müssen.

Von dieser Problemstellung ausgehend, soll eine Fischaufzuchtanlage für Salzwasserfische und ein Verfahren zum Betreiben einer Fischaufzuchtanlage für Salzwasserfische geschaffen werden, mit denen die oben genannten Nachteile zumindest verringert werden.

Erfindungsgemäß erfolgt die Problemlösung mit einer gattungsgemäßen Fischaufzuchtanlage dadurch, dass der kürzestmögliche Weg innerhalb des mindestens einen Fischaufzuchtbeckens von der Zuleitungseinrichtung zu der Ableitungseinrichtung zunächst von der Wasseraufbereitungseinrichtung weg- und anschließend wieder zu der Wasseraufbereitungseinrichtung hinführt.

Wasser, das über die Zuleitungseinrichtung dem Fischaufzuchtbecken zugeleitet wird, kann auf unterschiedlichsten Wegen innerhalb des Fischaufzuchtbeckens zur Ableitungseinrichtung gelangen. Welchen Weg es dabei tatsächlich wählt, ist offen. Für die Lösung der gestellten Aufgabe ist es wichtig, dass in dem räumlich vorgegebenem Becken der kürzest mögliche Weg, auf den das Wasser von der Zuleitungseinrichtung zur Ableitungseinrichtung gelangen kann, eingeschlagen wird. Dieser Weg muss selbstverständlich innerhalb des Fischaufzuchtbeckens liegen. Beansprucht wird folglich die kürzeste Verbindung zwischen der Zuleitungseinrichtung und der Ableitungseinrichtung innerhalb des Fischaufzuchtbeckens.

Herkömmlicherweise wird man die Wasseraufbereitungseinrichtung an einer Seite des mindestens einen Fischaufzuchtbeckens positionieren. Auf diese Weise ist es beispielsweise möglich, aufbereitetes Wasser aus der Wasseraufbereitungseinrichtung direkt und ohne lange Transportwege dem Fischaufzuchtbecken zuzuführen. Um jedoch das gesamte in dem mindestens einen Fischaufzuchtbecken enthaltene Wasser umzuwälzen und im Kreislauf der Wasseraufbereitungseinrichtung zuführen zu können, muss in diesem Fall das aufzubereitende Wasser am anderen Ende des Beckens entnommen werden. Dieses wird dann wie oben beschrieben entlang einer Seitenkante des Beckens beispielsweise in einer offenen Rinne zur Wasseraufbereitungseinrichtung geführt. Dadurch, dass das Wasser in dem mindestens einen Fischaufzuchtbecken mit einer erfindungsgemäßen Fischaufzuchtanlage für Salzwasserfische zunächst von der Wasseraufbereitungseinrichtung weg- und anschließend wieder zu der Wasseraufbereitungseinrichtung hingeführt wird, ist es möglich, Zuleitungseinrichtungen und Ableitungseinrichtungen räumlich dicht beieinander anzuordnen. Durch optimale Positionierung der Wasseraufbereitungseinrichtung sind nun beide Transportwege, also sowohl der Transport des aufzubereitenden Wassers aus dem Fischaufzuchtbecken zur Wasseraufbereitungseinrichtung als auch der Transport des aufbereiteten Wassers aus der Wasseraufbereitungseinrichtung zum mindestens einen Fischaufzuchtbecken, sehr kurz.

Vorzugsweise ist das mindestens eine Fischaufzuchtbecken U-förmig ausgebildet. In diesem Fall werden die Zuleitungseinrichtung am Ende des einen Schenkels und die Ableitungseinrichtung am Ende des anderen Schenkels angeordnet. Die Wasseraufbereitungseinrichtung ist vorzugsweise dazwischen angeordnet. Das Wasser, das über die Zuleitungseinrichtung in das mindestens eine Fischaufzuchtbecken gepumpt wird, muss nun, um zur Ableitungseinrichtung zu gelangen, den gesamten Weg durch das U zurücklegen. Somit ist gewährleistet, dass das Ganze im mindestens einen Fischaufzuchtbecken enthaltene Wasser umgewälzt und der Wasseraufbereitungseinrichtung zugeführt wird, ohne das außerhalb des Beckens lange Transportwege nötig sind.

Alternativ ist das Becken vorteilhafterweise als Ring- oder ringsegmentförmig ausgebildet. Hat das mindestens eine Fischaufzuchtbecken die Form eines Ringes, weist es beispielsweise eine radiale Wand auf, sodass das Wasser nicht immer im Kreis geleitet werden kann. Auf jeweils einer Seite der radialen Wand sind beispielsweise umfangseitig die Zuleitungseinrichtung und die Ableitungseinrichtung angeordnet. Auch in dieser Konfiguration ist der Transportweg, den das Wasser außerhalb des Beckens zurücklegen muss, minimiert.

Vorzugsweise umfasst die Fischaufzuchtanlage wenigstens zwei Fischaufzuchtbecken, die miteinander verbunden sind. Zwei beispielsweise rechteckig ausgebildete Becken sind dabei beispielsweise mit einer Längsseite aneinander angrenzend angeordnet, sodass sie eine gemeinsame Wand aufweisen. Beispielsweise an der kurzen Seite des einen Beckens ist die Zuleitungseinrichtung angeordnet, durch die aufbereitetes Wasser aus der Wasseraufbereitungseinrichtung in das erste Becken eingeleitet wird. Am dieser Seite entgegengesetzten Ende des ersten Beckens befindet sich in der gemeinsamen Wand zum zweiten Becken ein Durchbruch, durch den Wasser aus dem ersten Fischaufzuchtbecken ins zweite Fischaufzuchtbecken gelangen kann. An der kurzen Seite dieses zweiten Fischaufzuchtbeckens ist die Ableitungseinrichtung so vorgesehen, dass auch hier wieder die Transportwege, die das Salzwasser außerhalb des Beckens zurücklegen muss, minimiert sind.

Die Zuleitungsrichtung und die Ableitungseinrichtung sind vorzugsweise als geschlossene Rohre ausgebildet.

Alternativ können die Zuleitungseinrichtung und die Ableitungseinrichtung auch als offene Rinnen ausgebildet sein.

Die Wasseraufbereitungseinrichtung umfasst vorzugsweise mindestens einen mechanischen Filter. Vorteilhafterweise umfasst die Wasseraufbereitungseinrichtung auch noch zusätzlich oder alternativ mindestens einen biologischen Filter.

Durch die verschiedenen Filter werden verschiedene Verunreinigungen aus dem Wasser entfernt, sodass das gereinigte dem mindestens einen Fischaufzuchtbecken wieder zugeführte Wasser eine optimale Qualität hat.

Innerhalb des mindestens einen Fischaufzuchtbeckens sind beispielsweise mehrere Teile durch wasserdurchlässige und beispielsweise flexible Wände, beispielsweise Netze, abgetrennt. In diesen verschiedenen Bereichen können dann Fische verschiedenen Alters gehalten und somit optimal versorgt werden. Über die Umfangsseite des mindestens einen Fischaufzuchtbeckens sind dann beispielsweise verschiedene Futterautomaten verteilt, über die die Fische verschiedenen Alters mit jeweils optimal auf ihr Alter abgestimmtem Futter versorgt werden können.

Das gattungsgemäße Verfahren zum Betreiben einer Fischaufzuchtanlage für Salzwasserfische ist **dadurch gekennzeichnet, dass** das Wasser auf einem kürzestmöglichen Weg im Fischaufzuchtbecken von der Zuleitungseinrichtung zur Ableitungseinrichtung zunächst von der Wasseraufbereitungseinrichtung weggeführt und anschließend wieder zu der Wasseraufbereitungseinrichtung hingeführt wird.

Vorzugsweise wird das Wasser in der Wasseraufbereitungseinrichtung dabei zumindest einmal biologisch und einmal mechanisch gereinigt. Auf diese Weise ist sichergestellt, dass die verschiedenen möglichen Verunreinigungen im Salzwasser des mindestens einen Fischaufzuchtbeckens entfernt werden.

Mit Hilfe einer Zeichnung soll ein Ausführungsbeispiel der Erfindung nachfolgend näher erläutert werden.

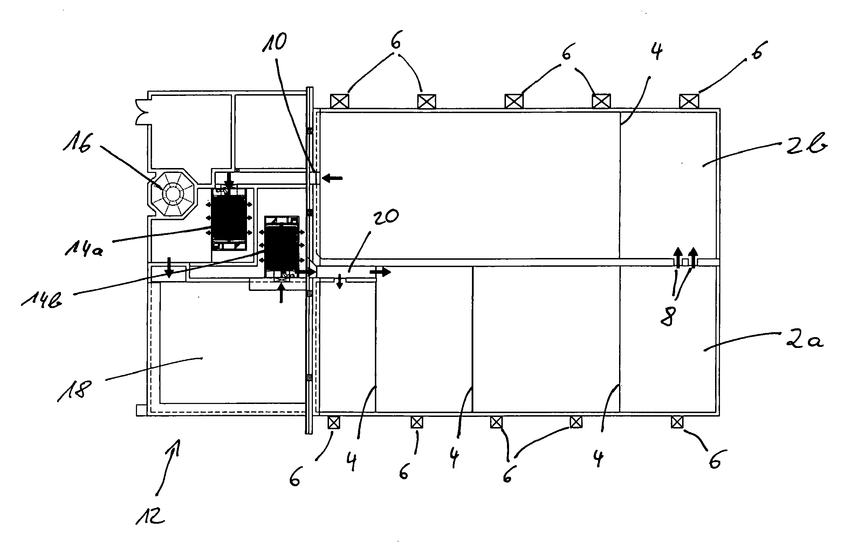

Die einzige Figur zeigt einen schematischen Plan einer erfindungsgemäßen Fischaufzuchtanlage.

Im Ausführungsbeispiel weist die Fischaufzuchtanlage zwei Fischaufzuchtbecken 2a und 2b auf. In diesen Fischaufzuchtbecken 2a, 2b sind durch Netze 4 verschiedene Segmente abgetrennt. In diesen werden beispielsweise Fische verschiedenen Alters gehalten, die über Futterautomaten 6 optimal mit Futter versorgt werden können. Das Wasser bewegt sich entlang der durch die Pfeile gekennzeichneten Richtungen. Das Wasser im Fischaufzuchtbecken 2a gelangt durch zwei Durchlässe 8 in das Fischaufzuchtbecken 2b. Nachdem es das Fischaufzuchtbecken 2b durchquert hat wird es über eine Ableitungseinrichtung 10, die als Ablaufrinne ausgebildet ist, dem Fischaufzuchtbecken 2b entnommen und einer Wasseraufbereitungseinrichtung 12 zugeführt. Das Wasser gelangt nun zu einem ersten mechanischen Filter 14a. Dieser ist beispielsweise als Trommelfilter ausgebildet.

Nachdem das Wasser den mechanischen Filter 14a verlassen hat gelangt zumindest ein Teil des Wassers in einen Abschäumer 16, in dem es von organischen, insbesondere eiweißhaltigen organischen Substanzen befreit wird. Anschließend gelangt das Wasser, den Pfeilen folgend, zu einem biologischen Filter 18. Danach wird es in einem mechanischen Filter 14b nochmals mechanisch gefiltert, bevor es über eine Zuleitungseinrichtung 20 wieder dem Fischaufzuchtbecken 2a zugeführt wird.

Ein Teil des aufbereiteten Wassers gelangt über die Zuleitungseinrichtung 20 sowohl in das erste als auch in das zweite durch Netze 4 abgetrennte Segment des Fischaufzuchtbeckens 2a. Auf diese Weise ist sichergestellt, dass beispielsweise im ersten Segment enthaltene Jungfische nicht der gesamten Strömung ausgesetzt sind, die durch das aufbereitete Wasser, das über die Zuleitungseinrichtung 20 dem Fischaufzuchtbecken 2a zugeführt wird, verursacht wird.

Das Wasser muss um von der Zuleitungseinrichtung 20 über das Fischaufzuchtbecken 2a und das Fischaufzuchtbecken 2b zur Ableitungsvorrichtung 10 zu gelangen, durch die beiden Durchlässe 8 fließen. Auf diese Weise ist gewährleistet, dass das gesamte in den Fischaufzuchtbecken 2a und 2a enthaltene Wasser umgewälzt und der Wasseraufbereitungseinrichtung 12 zugeführt wird. Dabei ist es nicht nötig, entweder das aufbereitete Frischwasser oder das aufzubereitende Wasser auf dem Weg von der oder zu der Wasseraufbereitungseinrichtung 12 über lange Wege außerhalb der Fischaufzuchtbecken 2a, 2b zu transportieren. Zudem sind die Fischaufzuchtbecken 2a, 2b gut für Wartungs- oder andere anfallende Arbeiten zu erreichen.

### Bezugszeichenliste

- Pfeil: Fließrichtung des Wassers
- 2a: Fischaufzuchtbecken
- 2b: Fischaufzuchtbecken
- 4: Netz
- 6: Futterautomat
- 8: Durchlass
- 10: Ableitungseinrichtung
- 12: Wasseraufbereitungseinrichtung
- 14a: mechanischer Filter
- 14b: mechanischer Filter
- 16: Abschäumer
- 18: biologischer Filter
- 20: Zuleitungseinrichtung

## Patentansprüche

1. Fischaufzuchtanlage für Salzwasserfische mit mindestens einem Fischaufzuchtbecken (2a, 2b), einer Wasseraufbereitungseinrichtung (12), einer Zuleitungseinrichtung (20), über die aufbereitetes Wasser aus der Wasseraufbereitungseinrichtung (12) dem Fischaufzuchtbecken (2a, 2b) zuführbar ist, und einer Ableitungseinrichtung (10), über die aufzubereitendes Wasser aus dem Fischaufzuchtbecken (2a, 2b) ableitbar und der Wasseraufbereitungseinrichtung (12) zuführbar ist, **dadurch gekennzeichnet, dass** der kürzestmögliche Weg innerhalb des Fischaufzuchtbeckens (2a, 2b) von der Zuleitungseinrichtung (20) zu der Ableitungseinrichtung (10) zunächst von der Wasseraufbereitungseinrichtung (12) weg- und anschließend zu der Wasseraufbereitungseinrichtung (12) hinführt.

2. Fischaufzuchtanlage nach Anspruch 1, **dadurch gekennzeichnet, dass** das Fischaufzuchtbecken (2a, 2b) U-förmig ausgebildet ist.

3. Fischaufzuchtanlage nach Anspruch 1, **dadurch gekennzeichnet, dass** das Fischaufzuchtbecken (2a, 2b) ring- oder ringsegmentförmig ausgebildet ist.

4. Fischaufzuchtanlage nach Anspruch 1, 2 oder 3, **gekennzeichnet durch** wenigstens zwei Fischaufzuchtbecken (2a, 2b), die miteinander verbunden sind.

5. Fischaufzuchtanlage nach einem oder mehreren der vorstehenden Ansprüche, **dadurch gekennzeichnet, dass** die Zuleitungseinrichtung (20) und die Ableitungseinrichtung (10) als geschlossene Rohre ausgebildet sind.

6. Fischaufzuchtanlage nach einem oder mehreren der Ansprüche 1 bis 4, **dadurch gekennzeichnet, dass** die Zuleitungseinrichtung (20) und die Ableitungseinrichtung (10) als offene Rinnen ausgebildet sind.

7. Fischaufzuchtanlage nach einem oder mehreren der vorstehenden Ansprüche, **dadurch gekennzeichnet, dass** die Wasseraufbereitungseinrichtung (12) mindestens einen mechanischen Filter (14a, 14b) umfasst.

8. Fischaufzuchtanlage nach einem oder mehreren der vorstehenden Ansprüche, **dadurch gekennzeichnet, dass** die Wasseraufbereitungseinrichtung (12) mindestens einen biologischen Filter (18) umfasst.

9. Fischaufzuchtanlage nach einem oder mehreren der vorstehenden Ansprüche, **dadurch gekennzeichnet, dass** das Fischaufzuchtbecken (2a, 2b) mittels Netzen (4) in einzelne Segmente unterteilt ist.

10. Fischaufzuchtanlage nach Anspruch 9, **dadurch gekennzeichnet, dass** die Segmente unterschiedlich groß sind.

11. Verfahren zum Betreiben einer Fischaufzuchtanlage für Salzwasserfische, mit folgenden Schritten:
a) Entnehmen von aufzubereitendem Wasser aus mindestens einem Fischaufzuchtbecken (2a, 2b) über eine Ableitungseinrichtung (10),
b) Aufbereiten des entnommenen Wassers in einer Wasseraufbereitungseinrichtung (12),
c) Zuführen des in der Wasseraufbereitungseinrichtung (12) aufbereiteten Wassers in mindestens ein Fischaufzuchtbecken (2a, 2b) über eine Zuleitungseinrichtung (20),
**dadurch gekennzeichnet, dass**
das Wasser auf dem kürzestmöglichen Weg in dem Fischaufzuchtbecken (2a, 2b) von der Zuleitungseinrichtung (20) zur Ableitungseinrichtung (10) zunächst von der Wasseraufbereitungseinrichtung (12) weggeführt und anschließend wieder zu der Wasseraufbereitungseinrichtung (12) hingeführt wird.

12. Verfahren nach Anspruch 11, **dadurch gekennzeichnet, dass** das Wasser in der Wasseraufbereitungseinrichtung (12) zumindest einmal biologisch und einmal mechanisch gereinigt wird.
